(19) Europäisches Patentamt
European Patent Office
Office européen des brevets

(11) EP 4 307 551 A1

(12) DEMANDE DE BREVET EUROPEEN

(43) Date de publication:
17.01.2024 Bulletin 2024/03

(51) Classification Internationale des Brevets (IPC):
$H02M\ 7/483$ (2007.01)   $H02M\ 3/158$ (2006.01)
$H02M\ 3/335$ (2006.01)   $H02M\ 1/00$ (2006.01)
$H02M\ 1/32$ (2007.01)

(21) Numéro de dépôt: 23182303.0

(22) Date de dépôt: 29.06.2023

(52) Classification Coopérative des Brevets (CPC):
H02M 7/4835; H02M 1/0022; H02M 1/0025;
H02M 1/0093; H02M 1/325; H02M 3/158;
H02M 3/1584; H02M 3/33573

(84) Etats contractants désignés:
AL AT BE BG CH CY CZ DE DK EE ES FI FR GB
GR HR HU IE IS IT LI LT LU LV MC ME MK MT NL
NO PL PT RO RS SE SI SK SM TR
Etats d'extension désignés:
BA
Etats de validation désignés:
KH MA MD TN

(30) Priorité: 12.07.2022 FR 2207146

(71) Demandeur: Supergrid Institute
69100 Villeurbanne (FR)

(72) Inventeurs:
• PAEZ ALVAREZ, Juan David
69100 VILLEURBANNE (FR)
• MOREL, Florent
69100 VILLEURBANNE (FR)
• SHINODA, Kosei
69100 VILLEURBANNE (FR)

(74) Mandataire: Cabinet Beau de Loménie
Immeuble Eurocentre
179 Boulevard de Turin
59777 Lille (FR)

(54) **CONVERTISSEUR DC/DC COMPRENANT DEUX MODULES DE CONVERSION ELECTRIQUE**

(57) Convertisseur de tension (10) DC/DC comprenant des premier et deuxième modules de conversion électrique (30,50) comprenant chacun au moins une chaîne de sous-modules (43), le convertisseur de tension comprenant en outre un module de contrôle (70) configuré pour commander des organes de commande des sous-modules des premier et deuxième modules de conversion électrique, le module de contrôle comprenant un calculateur (76) configuré pour calculer une consigne d'énergie interne ($W_{i1}*$) du premier module de conver- sion électrique par application d'une fonction ayant un paramètre d'entrée réglable ($K_1$), ladite consigne d'éner- gie interne du premier module de conversion électrique étant déterminée en fonction de la tension mesurée ($v_{3,4}$) entre les troisième et quatrième terminaux continus, le module de contrôle étant configuré pour déduire de cette consigne d'énergie interne du premier module de conversion électrique une consigne de tension aux bornes de chaque condensateur dudit premier module de con- version électrique.

[Fig. 1]

EP 4 307 551 A1

**Description**

Domaine Technique

La présente invention concerne le domaine technique des installations de transport de courant continu haute tension multi-terminaux (HVDC) dans lesquels des stations intègrent des convertisseurs modulaires multi-niveaux (MMC). La présente invention concerne plus précisément un convertisseur de tension modulaire multi-niveaux (MMC) de type DC/DC permettant de convertir une première tension continue en une seconde tension continue. Un tel convertisseur est particulièrement adapté pour être connecté dans une installation HVDC.

Les convertisseurs modulaires multi-niveaux comprennent traditionnellement une ou plusieurs chaine(s) de sous-modules commandables, lesdits sous-modules comprenant chacun un condensateur. En commandant lesdits sous-modules afin d'insérer ou non leurs condensateurs dans la chaîne de sous-modules associée, il est possible d'ajuster la tension du bras dans lequel est connectée cette chaîne de sous-modules.

Technique antérieure

On connaît des convertisseurs modulaires multi-niveaux de type DC/DC permettant de convertir une première tension continue en une seconde tension continue, et comprenant :

- des premier et deuxième terminaux continus configurés pour être reliés électriquement à un premier réseau d'alimentation électrique continu;
- des troisième et quatrième terminaux continus configurés pour être reliés électriquement à un second réseau d'alimentation électrique continu;
- au moins un premier module de conversion électrique comprenant au moins une première borne continue reliée électriquement au premier terminal continu et au moins une première borne alternative reliée électriquement à une partie alternative du convertisseur de tension soumise à au moins une composante alternative de tension, le premier module de conversion électrique comprenant en outre au moins une chaîne de sous-modules connectés en série entre ladite première borne continue et ladite première borne alternative du premier module de conversion électrique, le premier module de conversion électrique étant configuré pour délivrer ou recevoir une puissance continue à destination ou en provenance dudit premier réseau d'alimentation électrique continu;
- au moins un deuxième module de conversion électrique comprenant au moins une première borne continue reliée électriquement au quatrième terminal continu et au moins une première borne alternative reliée électriquement à ladite partie alternative du convertisseur de tension, le deuxième module de conversion électrique comprenant en outre au moins une chaîne de sous-modules connectés en série entre ladite première borne continue et ladite première borne alternative du deuxième module de conversion électrique, le deuxième module de conversion électrique étant configuré pour délivrer ou recevoir une puissance continue à destination ou en provenance dudit second réseau d'alimentation électrique continu, les sous-modules des chaînes de sous-modules desdits premier et deuxième modules de conversion électrique étant commandables individuellement par un organe de commande propre à chaque sous-module et chaque sous-module comprenant un condensateur, l'organe de commande de chaque sous-module pouvant prendre au moins un premier état dans lequel le condensateur est inséré dans la chaîne de sous-modules correspondante et un deuxième état dans lequel le condensateur n'est pas inséré dans ladite chaîne de sous-modules, chaque chaîne de sous-modules présentant une énergie interne correspondant à l'énergie stockée dans les condensateurs des sous-modules de ladite chaîne de sous-modules, le convertisseur comprenant en outre un module de contrôle du convertisseur.

Il est connu que la tension des réseaux DC connectés entre eux au moyen d'un tel convertisseur MMC de type DC/DC est amenée à varier fortement en cas de perturbation en puissance, même faible, sur ces réseaux. Dans le cas où ces variations excèdent des valeurs limites de fonctionnement, lesdits réseaux DC et ledit convertisseur MMC risquent d'être endommagés.

Afin de ne pas être contraint d'interrompre le fonctionnement du convertisseur et des réseaux DC, il est connu d'augmenter la capacité desdits réseaux DC connectés au convertisseur MMC en y introduisant des condensateurs physiques supplémentaires. Ces condensateurs permettent de réduire la vitesse des variations de tension pouvant apparaitre sur ces réseaux DC pour des variations de puissance données. Ces condensateurs augmentent donc l'inertie des réseaux DC et influent sur leur stabilité, réduisant l'impact des perturbations en puissance subies par ces réseaux DC.

Un inconvénient est que ces condensateurs supplémentaires doivent être dimensionnés pour supporter des hautes-tensions. Ces condensateurs se révèlent en outre particulièrement encombrants et coûteux, ce qui n'est pas satisfaisant.

**EP 4 307 551 A1**

Exposé de l'invention

Un but de la présente invention est de proposer un convertisseur MMC de type DC/DC remédiant aux inconvénients précités.

Pour ce faire, l'invention porte sur un convertisseur de tension modulaire multi-niveaux, permettant de convertir une première tension continue en une seconde tension continue, le convertisseur comprenant :

- des premier et deuxième terminaux continus configurés pour être reliés électriquement à un premier réseau d'alimentation électrique continu;
- des troisième et quatrième terminaux continus configurés pour être reliés électriquement à un second réseau d'alimentation électrique continu;
- au moins un premier module de conversion électrique comprenant au moins une première borne continue reliée électriquement au premier terminal continu et au moins une première borne alternative reliée électriquement à une partie alternative du convertisseur de tension soumise à au moins une composante alternative de tension, le premier module de conversion électrique comprenant en outre au moins une chaîne de sous-modules connectés en série entre ladite première borne continue et ladite première borne alternative du premier module de conversion électrique, le premier module de conversion électrique étant configuré pour délivrer ou recevoir une puissance continue à destination ou en provenance dudit premier réseau d'alimentation électrique continu;
- au moins un deuxième module de conversion électrique comprenant au moins une première borne continue reliée électriquement au quatrième terminal continu et au moins une première borne alternative reliée électriquement à ladite partie alternative du convertisseur de tension, le deuxième module de conversion électrique comprenant en outre au moins une chaîne de sous-modules connectés en série entre ladite première borne continue et ladite première borne alternative du deuxième module de conversion électrique, le deuxième module de conversion électrique étant configuré pour délivrer ou recevoir une puissance continue à destination ou en provenance dudit second réseau d'alimentation électrique continu,

les sous-modules des chaînes de sous-modules desdits premier et deuxième modules de conversion électrique étant commandables individuellement par un organe de commande propre à chaque sous-module et chaque sous-module comprenant un condensateur, l'organe de commande de chaque sous-module pouvant prendre au moins un premier état dans lequel le condensateur est inséré dans la chaîne de sous-modules correspondante et un deuxième état dans lequel le condensateur n'est pas inséré dans ladite chaîne de sous-modules, chaque chaîne de sous-modules présentant une énergie interne correspondant à l'énergie stockée dans les condensateurs des sous-modules de ladite chaîne de sous-modules,
le convertisseur de tension comprenant en outre un module de contrôle du convertisseur configuré pour réguler les échanges d'énergie entre les premier et second réseaux d'alimentation électrique continus en commandant lesdits organes de commande des sous-modules des premier et deuxième modules de conversion électrique,
le module de contrôle comprenant un calculateur configuré pour calculer une consigne d'énergie interne du premier module de conversion électrique, cette énergie interne étant stockée dans les condensateurs des sous-modules dudit premier module de conversion électrique, cette consigne d'énergie interne du premier module de conversion électrique étant calculée par application d'une fonction ayant un paramètre d'entrée réglable, ladite consigne d'énergie interne du premier module de conversion électrique étant déterminée en fonction de la tension mesurée entre les troisième et quatrième terminaux continus, le module de contrôle étant configuré pour déduire de cette consigne d'énergie interne du premier module de conversion électrique une consigne de tension aux bornes de chaque condensateur dudit premier module de conversion électrique.

Par convertisseur modulaire multi-niveaux on entend un convertisseur de tension comprenant au moins une chaîne de sous-modules commandables, lesdits sous-modules comprenant au moins un condensateur pouvant être inséré ou non dans ladite chaîne de sous-modules afin d'ajuster la tension aux bornes de ladite chaîne de sous-modules.
Le convertisseur de tension selon l'invention est particulièrement adapté pour être connecté dans une installation HVDC et pour connecter entre eux un premier réseau d'alimentation électrique continu et un second réseau d'alimentation électrique continu.
De manière non limitative, le convertisseur de tension selon l'invention peut être un convertisseur modulaire multi-niveaux ayant une topologie Front-to-Front, un convertisseur de type Autotransformateur DC modulaire multi-niveaux ou encore un convertisseur de type DC-MMC.
Un premier réseau d'alimentation électrique continu peut être connecté au premier module de conversion électrique par l'intermédiaire des premier et deuxième terminaux continus. Un second réseau d'alimentation électrique continu peut être connecté au deuxième module de conversion électrique par l'intermédiaire des troisième et quatrième terminaux continus.

La partie alternative du convertisseur de tension est avantageusement traversée par au moins un courant alternatif.

De manière non limitative, ladite partie alternative peut être soumise à plusieurs composantes alternatives de tension. De manière non limitative, ladite partie alternative peut être en outre soumise à une ou plusieurs composantes continues de tension.

La partie alternative du convertisseur peut comprendre un transformateur ou encore une pluralité d'inductances.

Le premier module de conversion électrique comprend avantageusement un demi-bras, par exemple un demi-bras supérieur, s'étendant entre ladite première borne continue et ladite première borne alternative, ladite chaîne de sous-modules du premier module de conversion électrique étant connectée dans ledit demi-bras.

De préférence, au moins l'un des troisième et quatrième terminaux continus n'est pas relié directement au premier module de conversion électrique. De manière non limitative, les deuxième et quatrième terminaux continus peuvent être reliés entre eux de manière à présenter un même potentiel.

L'énergie interne d'une chaîne de sous-modules correspond à l'énergie stockée dans les condensateurs de ses sous-modules. L'énergie interne du premier module de conversion électrique correspond à la somme des énergies internes des chaînes de sous-modules de ce module de conversion électrique.

De préférence, le module de contrôle est configuré pour commander les organes de commande des sous-modules du premier module de conversion électrique afin de réguler l'énergie interne stockée dans les condensateurs dudit premier module de conversion électrique, en utilisant ladite consigne d'énergie interne du premier module de conversion électrique. Pour ce faire, le module de contrôle comprend avantageusement un module de commande des sous-modules du premier module de conversion électrique.

De préférence, le module de contrôle est également configuré pour commander les organes de commande des sous-modules du deuxième module de conversion électrique afin de réguler l'énergie interne stockée dans les condensateurs dudit deuxième module de conversion électrique. La commande des organes de commande des sous-modules des premier et deuxième modules de conversion électrique est avantageusement réalisée de manière coordonnée.

Selon l'invention, la consigne d'énergie interne du premier module de conversion électrique est calculée en fonction de la tension mesurée entre les troisième et quatrième terminaux continus et donc en fonction de la tension d'un second réseau d'alimentation électrique continu connecté auxdits troisième et quatrième terminaux continus. En imposant une telle consigne d'énergie interne dépendant de la tension entre les troisième et quatrième terminaux continus, une partie de l'énergie interne initialement stockée dans les condensateurs des sous-modules du premier module de conversion électrique peut être fournie audit second réseau d'alimentation électrique continu ou prélevée sur ce second réseau d'alimentation électrique continu afin d'absorber des perturbations sur ce réseau.

Autrement dit, ladite consigne d'énergie interne du premier module de conversion électrique est utilisée pour ajuster l'énergie fournie par le premier module de conversion électrique au second réseau d'alimentation électrique continu ou l'énergie prélevée par le premier module de conversion électrique sur le second réseau d'alimentation électrique continu.

A titre d'exemple, en cas de baisse soudaine de la tension du second réseau d'alimentation électrique continu due à une perturbation sur ce réseau, ladite consigne d'énergie interne du premier module de conversion électrique décroit également. Dès lors, une quantité d'énergie initialement stockée dans les condensateurs du premier module de conversion électrique est libérée et peut être fournie au second réseau d'alimentation électrique continu afin d'augmenter sa tension et ainsi contrer la perturbation.

Selon l'invention, l'énergie interne du premier module de conversion contribue à limiter les variations de tension entre les troisième et quatrième terminaux continus et donc aux bornes de ce second réseau d'alimentation électrique continu.

Plus précisément, grâce au module de contrôle du convertisseur selon l'invention, l'énergie interne stockée dans les condensateurs du premier module de conversion électrique est utilisée pour réduire la dérivée temporelle de la tension entre les troisième et quatrième terminaux continus.

Autrement dit, la consigne d'énergie interne calculée grâce au calculateur selon l'invention permet de réguler notamment la tension aux bornes de chaque condensateur du premier module de conversion électrique afin de contenir d'éventuelles perturbations en puissance apparaissant soudainement sur le second réseau d'alimentation électrique continu et qui pourraient entraîner d'importantes variations de tension sur ledit réseau.

Cette contribution de l'énergie interne du premier module de conversion électrique du convertisseur de tension selon l'invention pour stabiliser un second réseau d'alimentation électrique continu connecté aux troisième et quatrième terminaux continus équivaut à augmenter virtuellement et de manière réglable la capacité vue par le second réseau d'alimentation électrique continu. Ceci équivaut encore à connecter un condensateur virtuel de capacité réglable en parallèle dudit second réseau d'alimentation électrique continu.

Le paramètre d'entrée réglable du calculateur peut être réglé à tout moment durant les opérations de régulation des échanges d'énergie entre les premier et second réseaux d'alimentation électrique continus. Aussi, il est possible pour l'utilisateur d'agir directement sur la consigne d'énergie interne du premier module de conversion électrique afin d'ajuster la contribution de l'énergie interne du premier module de conversion électrique à la stabilité du second réseau d'alimentation électrique continu. L'utilisateur peut en outre ajuster le paramètre d'entrée réglable en fonction de perturbations sur ledit second réseau d'alimentation électrique continu afin de le stabiliser. Ledit paramètre d'entrée réglable est avantageusement réglable en temps réel.

En réglant le paramètre d'entrée réglable du calculateur, on fait virtuellement varier la capacité du condensateur virtuel. L'intérêt est de pouvoir agir sur le second réseau d'alimentation électrique continu tout en maintenant le découplage entre la puissance que le convertisseur de tension prélève ou fournit au second réseau d'alimentation électrique continu et la tension du second réseau d'alimentation électrique continu.

Contrairement à un condensateur physique réellement placé en parallèle du second réseau d'alimentation électrique continu, le condensateur virtuel généré par le module de contrôle selon l'invention n'a sensiblement pas de coût et ne peut pas être dégradé. En particulier, le condensateur virtuel réglable selon l'invention peut prendre des valeurs de capacités très élevées, ce qui n'est matériellement pas possible pour un condensateur réel.

Par ailleurs, grâce au module de contrôle du convertisseur selon l'invention, l'énergie interne du premier module de conversion électrique contribue à la stabilité d'un second réseau d'alimentation électrique continu qui n'est pas directement connecté audit premier module de conversion électrique. L'invention offre une contribution en énergie supplémentaire, fournie par un module de conversion électrique qui n'est pas directement connecté au second réseau d'alimentation électrique continu. Le convertisseur de tension selon l'invention permet d'augmenter l'inertie du second réseau d'alimentation électrique continu par rapport à un convertisseur dans lequel seuls les modules de conversion directement connectés au second réseau d'alimentation électrique continu contribuent à la stabilité de ce réseau DC. Le convertisseur de tension selon l'invention permet donc de stabiliser d'autant plus efficacement le second réseau d'alimentation électrique continu ce qui réduit encore l'impact des perturbations en puissance subies par ce réseau.

La valeur de la capacité du condensateur virtuel générée par contrôle du convertisseur de tension selon l'invention est particulièrement élevée.

Le calculateur du module de contrôle du convertisseur selon l'invention est configuré pour calculer une consigne d'énergie interne d'un module de conversion électrique (le premier module de conversion électrique) en fonction d'une tension entre deux terminaux continus dont au moins un n'est pas connecté directement audit module de conversion électrique. Cette consigne d'énergie interne est calculée en fonction d'une tension entre deux terminaux continus qui sont connectés directement à un autre module de conversion électrique (le deuxième module de conversion électrique).

Le module de contrôle permet par conséquent d'améliorer la stabilité du second réseau d'alimentation électrique continu en utilisant la contribution de l'énergie interne du premier module de conversion électrique qui n'est pas connecté directement à ce second réseau d'alimentation électrique continu.

De manière non limitative, lesdites premières bornes alternatives du premier module de conversion électrique et du deuxième module de conversion électrique peuvent être reliées électriquement l'une à l'autre. Le convertisseur de tension présente une telle configuration lorsqu'il présente une topologie de type DC-MMC.

Le module de contrôle comprend avantageusement un module de gestion de l'énergie configuré pour réguler l'énergie interne du premier module de conversion électrique. Ce module de gestion de l'énergie est configuré pour déterminer des références de courants circulant dans les différents modules de conversion électrique afin de contrôler l'énergie stockée dans les condensateurs des sous-modules.

De préférence, ledit calculateur reçoit en entrée au moins ledit paramètre d'entrée réglable et ladite tension mesurée entre les troisième et quatrième terminaux continus et délivre ladite consigne d'énergie interne du premier module de conversion électrique.

De préférence ledit calculateur reçoit en outre en entrée une consigne de tension entre les troisième et quatrième terminaux continus et/ou une valeur nominale de l'énergie interne du premier module de conversion électrique.

De manière non limitative, le module de contrôle peut comprendre un autre calculateur configuré pour calculer une consigne d'énergie interne du deuxième module de conversion électrique, cette énergie interne étant stockée dans les condensateurs des sous-modules dudit deuxième module de conversion électrique, cette consigne d'énergie interne du deuxième module de conversion électrique étant calculée par application d'une fonction ayant un paramètre d'entrée réglable, ladite consigne d'énergie interne du deuxième module de conversion électrique étant fonction de la tension mesurée entre les troisième et quatrième terminaux continus, le module de contrôle supplémentaire étant configuré pour déduire de cette consigne d'énergie interne du deuxième module de conversion électrique une consigne de tension aux bornes de chaque condensateur dudit deuxième module de conversion électrique.

Avantageusement, le paramètre d'entrée réglable est un coefficient de capacité virtuelle réglable.

Avantageusement, le calculateur est configuré pour calculer la consigne d'énergie interne $W_{i1}{}^*$ du premier module de conversion électrique selon la fonction :

[Math. 1]

$$W_{i1}^* = \frac{1}{2} N C_1 K_1 \left( V_{3,4}^2 - V_{3,4ref}^{*2} \right) + W_{1ref}$$

où N est le nombre de chaînes de sous-modules du premier module de conversion électrique, $C_1$ est une capacité équivalente d'une chaîne de sous-modules du premier module de conversion électrique, $K_1$ est le paramètre d'entrée réglable, $v_{3,4}$ est la tension mesurée entre les troisième et quatrième terminaux continus, $v^*_{3,4ref}$ est une consigne de tension entre les troisième et quatrième terminaux continus et $W_{1ref}$ est une valeur nominale de l'énergie interne du premier module de conversion électrique lorsque $v_{3,4}$ est égale à $v^*_{3,4ref}$. Autrement dit, $C_1$ est la capacité équivalente des condensateurs des sous-modules d'une des chaînes de sous-modules du premier module de conversion électrique.

Cette équation est une équation générale s'appliquant à un convertisseur DC/DC quelconque.

Partant de cette expression de la consigne d'énergie interne $W_{i1}^*$, il peut être démontré que :

[Math. 2]

$$\frac{1}{2} \left( C_{dc2} + \frac{1}{alpha} C_1 K_1 \right) \frac{dV_{3,4}^2}{dt} = P_{1,2} - P_{dc2}$$

où $C_{dc2}$ est la capacité équivalente du second réseau d'alimentation électrique continu connecté aux troisième et quatrième terminaux continus, $P_{1,2}$ est la puissance prélevée (respectivement fournie) au premier réseau d'alimentation électrique continu, $P_{dc2}$ est la puissance consommée (respectivement fournie) par le second réseau d'alimentation électrique continu et alpha est un facteur dépendant de la topologie du convertisseur de tension.

Selon cette équation, grâce au module de contrôle selon l'invention, la capacité du second réseau d'alimentation électrique continu est augmentée virtuellement d'une valeur de capacité virtuelle, en utilisant l'énergie interne du premier module de conversion électrique. La valeur de cette capacité virtuelle est :

[Math. 3]

$$\frac{1}{alpha} C_1 K_1$$

La valeur de cette capacité virtuelle peut être réglée en ajustant le paramètre d'entrée réglable $K_1$.

Avantageusement, le module de contrôle est en outre configuré pour déduire de ladite consigne d'énergie interne du premier module de conversion électrique une consigne de tension aux bornes des chaînes de sous-modules desdits premier et deuxième modules de conversion électrique.

Le module de contrôle est donc configuré pour contrôler, de préférence de manière coordonnée, les tensions aux bornes des chaînes de sous-modules des premier et deuxième modules de conversion électrique, ce qui permet de réguler les échanges d'énergie entre les premier et deuxième modules de conversion électrique.

Avantageusement, le premier module de conversion électrique comprend une deuxième borne alternative reliée électriquement à ladite partie alternative du convertisseur de tension, le premier module de conversion électrique comprenant en outre une chaîne de sous-modules connectés en série entre ladite première borne continue et ladite deuxième borne alternative.

Le premier module de conversion électrique comprend alors au moins deux chaînes de sous-modules connectées respectivement entre la première borne continue et la première borne alternative et entre la première borne continue et la deuxième borne alternative du premier module de conversion électrique. Ces chaines de sous-modules sont avantageusement chacune connectées respectivement dans un premier et un deuxième demi-bras supérieurs du premier module de conversion électrique.

Avantageusement, le premier module de conversion électrique comprend en outre une deuxième borne continue reliée électriquement à l'un des deuxième et troisième terminaux continus, le premier module de conversion électrique comprenant en outre une chaîne de sous-modules connectés en série entre ladite première borne alternative et ladite deuxième borne continue du premier module de conversion électrique. Une telle configuration correspond notamment à un convertisseur de tension présentant une topologie en autotransformateur DC ou en Front-to-Front MMC.

Le premier module de conversion électrique comprend avantageusement un demi-bras inférieur s'étendant entre ladite première borne alternative et ladite deuxième borne continue, et dans lequel est connectée ladite chaîne de sous-modules.

Le premier module de conversion électrique comprend avantageusement au moins un premier bras s'étendant entre ses première et deuxième bornes continues.

Lorsque le convertisseur de tension présente une topologie en autotransformateur DC, ladite deuxième borne continue est reliée électriquement au troisième terminal continu. Lorsque le convertisseur de tension présente une topologie en Front-to-Front MMC, ladite deuxième borne continue est reliée électriquement au deuxième terminal continu.

De préférence, au moins une inductance est connectée en série avec ladite chaîne de sous-modules entre ladite première borne alternative et ladite deuxième borne continue du premier module de conversion électrique.

De manière avantageuse, le module de contrôle comprend un calculateur supplémentaire configuré pour calculer une consigne d'énergie interne du deuxième module de conversion électrique, cette énergie interne étant stockée dans les condensateurs des sous-modules dudit deuxième module de conversion électrique, cette consigne d'énergie interne du deuxième module de conversion électrique étant calculée par application d'une fonction ayant un paramètre d'entrée réglable, ladite consigne d'énergie interne du deuxième module de conversion électrique étant fonction de la tension mesurée entre les premier et deuxième terminaux continus, le module de contrôle supplémentaire étant configuré pour déduire de cette consigne d'énergie interne du deuxième module de conversion électrique une consigne de tension aux bornes de chaque condensateur dudit deuxième module de conversion électrique.

Aussi, la consigne d'énergie interne du deuxième module de conversion électrique est calculée en fonction de la tension mesurée entre les premier et deuxième terminaux continus et donc en fonction de la tension d'un premier réseau d'alimentation électrique continu connecté auxdits premier et deuxième terminaux continus. L'énergie interne du deuxième module de conversion contribue à limiter les variations de tension entre les premier et deuxième terminaux continus et donc aux bornes de ce premier réseau d'alimentation électrique continu.

Cette contribution de l'énergie interne du deuxième module de conversion électrique du convertisseur de tension pour stabiliser un premier réseau d'alimentation électrique continu connecté aux premier et deuxième terminaux continus équivaut ici également à augmenter virtuellement et de manière réglable la capacité vue par le premier réseau d'alimentation électrique continu. Ceci équivaut encore à connecter un condensateur virtuel de capacité réglable en parallèle dudit premier réseau d'alimentation électrique continu.

Préférentiellement, le deuxième module de conversion électrique comprend en outre une deuxième borne continue reliée électriquement au troisième terminal continu, le deuxième module de conversion électrique comprenant en outre une chaîne de sous-modules connectés en série entre ladite première borne alternative et ladite deuxième borne continue du deuxième module de conversion électrique.

Cette configuration correspond à une topologie de type Autotransformateur DC ou à une topologie en Front-to-Front MMC. Le deuxième module de conversion électrique comprend avantageusement un demi-bras supérieur s'étendant entre ladite première borne alternative et ladite deuxième borne continue, dans lequel est connectée ladite chaîne de sous-modules.

Avantageusement, le convertisseur de tension comprend en outre un transformateur relié électriquement à la première borne alternative du premier module de conversion électrique et à la première borne alternative du deuxième module de conversion électrique.

La partie alternative du convertisseur de tension comprend alors ledit transformateur.

L'invention porte également sur un module de contrôle pour un convertisseur modulaire multi-niveaux tel que décrit précédemment, comprenant un calculateur configuré pour calculer une consigne d'énergie interne du premier module de conversion électrique, cette énergie interne étant stockée dans les condensateurs des sous-modules dudit premier module de conversion électrique, cette consigne d'énergie interne du premier module de conversion électrique étant calculée par application d'une fonction ayant un paramètre d'entrée réglable, ladite consigne d'énergie interne du premier module de conversion électrique étant fonction de la tension mesurée entre les troisième et quatrième terminaux continus, le module de contrôle étant configuré pour déduire de cette consigne d'énergie interne du premier module de conversion électrique une consigne de tension aux bornes de chaque condensateur dudit premier module de conversion électrique.

L'invention porte de plus sur une installation de transport de courant continu haute tension comprenant un premier réseau d'alimentation électrique continu, un second réseau d'alimentation électrique continu et un convertisseur de tension tel que décrit précédemment, ledit convertisseur de tension étant configuré pour connecter électriquement lesdits premier et second réseaux d'alimentation électrique continus entre eux.

L'invention porte en outre sur un procédé de contrôle d'un convertisseur de tension modulaire multi-niveaux, le convertisseur permettant de convertir une première tension continue en une seconde tension continue, et comprenant :

- des premier et deuxième terminaux continus configurés pour être reliés électriquement à un premier réseau d'alimentation électrique continu;
- des troisième et quatrième terminaux continus configurés pour être reliés électriquement à un second réseau d'alimentation électrique continu;
- au moins un premier module de conversion électrique comprenant au moins une première borne continue reliée électriquement au premier terminal continu et au moins une première borne alternative reliée électriquement à une partie alternative du convertisseur de tension, le premier module de conversion électrique comprenant en outre au moins une chaîne de sous-modules connectés en série entre ladite première borne continue et ladite première borne alternative du premier module de conversion électrique, le premier module de conversion électrique étant configuré pour délivrer ou recevoir une puissance continue à destination ou en provenance dudit premier réseau d'alimentation électrique continu;

- au moins un deuxième module de conversion électrique comprenant au moins une première borne continue reliée électriquement au quatrième terminal continu et au moins une première borne alternative reliée électriquement à ladite partie alternative du convertisseur de tension, le deuxième module de conversion électrique comprenant en outre au moins une chaîne de sous-modules connectés en série entre ladite première borne continue et ladite première borne alternative du deuxième module de conversion électrique, le deuxième module de conversion électrique étant configuré pour délivrer ou recevoir une puissance continue à destination ou en provenance dudit second réseau d'alimentation électrique continu,

les sous-modules des chaînes de sous-modules desdits premier et deuxième modules de conversion électrique étant commandables individuellement par un organe de commande propre à chaque sous-module et chaque sous-module comprenant un condensateur, l'organe de commande de chaque sous-module pouvant prendre au moins un premier état dans lequel le condensateur est inséré dans la chaîne de sous-modules correspondante et un deuxième état dans lequel le condensateur n'est pas inséré dans ladite chaîne de sous-modules, chaque chaîne de sous-modules présentant une énergie interne correspondant à l'énergie stockée dans les condensateurs des sous-modules de ladite chaîne de sous-modules,

le procédé comprenant une étape de contrôle du convertisseur pour réguler les échanges d'énergie entre les premier et second réseaux d'alimentation électrique continus en commandant lesdits organes de commande des sous-modules des premier et deuxième modules de conversion électrique,

l'étape de contrôle comprenant une étape de calcul d'une consigne d'énergie interne du premier module de conversion électrique, cette énergie interne étant stockée dans les condensateurs des sous-modules dudit premier module de conversion électrique, cette consigne d'énergie interne du premier module de conversion électrique étant calculée par application d'une fonction ayant un paramètre d'entrée réglable, ladite consigne d'énergie interne du premier module de conversion électrique étant fonction de la tension mesurée entre les troisième et quatrième terminaux continus, l'étape de contrôle comprenant en outre une étape selon laquelle on déduit de cette consigne d'énergie interne du premier module de conversion électrique une consigne de tension aux bornes de chaque condensateur dudit premier module de conversion électrique.

De manière avantageuse, le paramètre d'entrée réglable est un coefficient de capacité virtuelle réglable.

Brève description des dessins

L'invention sera mieux comprise à la lecture de la description qui suit de modes de réalisation de l'invention donnés à titre d'exemples non limitatifs, en référence aux dessins annexés, sur lesquels :

[Fig. 1]la figure **1** illustre une installation comprenant un premier mode de réalisation d'un convertisseur de tension selon l'invention ;
[Fig. 2]la figure **2** illustre un module de contrôle du convertisseur de la figure 1;
[Fig. 3]la figure **3** illustre un calculateur du module de contrôle de la figure 2 ;
[Fig. 4]la figure **4** illustre une installation comprenant un deuxième mode de réalisation d'un convertisseur de tension selon l'invention; et
[Fig. 5]la figure **5** illustre une installation comprenant un troisième mode de réalisation d'un convertisseur de tension selon l'invention.

Description des modes de réalisation

L'invention porte sur un convertisseur de tension modulaire multi-niveaux (MMC), permettant de convertir une première tension continue en une seconde tension continue et comprenant un module de contrôle configuré pour réguler les échanges d'énergie entre deux réseaux d'alimentation électrique continus connectés entre eux par ce convertisseur de tension.

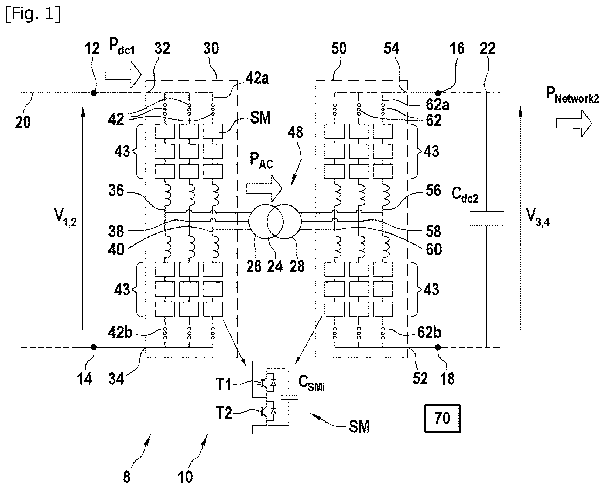

Une installation **8** comprenant un premier mode de réalisation non limitatif d'un convertisseur de tension **10** selon l'invention est illustrée en figure **1.** Dans ce premier mode de réalisation, le convertisseur de tension **10** présente une topologie en Front-to-Front MMC.

Dans ce premier mode de réalisation, le convertisseur de tension **10** comprend un premier terminal continu **12,** un deuxième terminal continu **14,** un troisième terminal continu **16** et un quatrième terminal continu **18.** Les premier et deuxième terminaux continus **12,14** sont configurés pour être reliés électriquement à un premier réseau d'alimentation électrique continu **20.** Les troisième et quatrième terminaux continus **16,18** sont configurés pour être reliés électriquement à un second réseau d'alimentation électrique continu **22.**

Le convertisseur de tension **10** comprend en outre un premier module de conversion électrique **30** et un deuxième module de conversion électrique **50.** Le premier module de conversion électrique **30** étant configuré pour délivrer ou recevoir une puissance continue à destination ou en provenance dudit premier réseau d'alimentation électrique continu **20.** Le deuxième module de conversion électrique **50** est configuré pour délivrer ou recevoir une puissance continue à destination ou en provenance dudit second réseau d'alimentation électrique continu **22.**

Le premier module de conversion électrique **30** comprend une première borne continue **32** reliée électriquement au premier terminal continu **12** et une deuxième borne continue **34** reliée au deuxième terminal continu **14.** Le premier module de conversion électrique **30** comprend en outre une première borne alternative **36,** une deuxième borne alternative **38** et une troisième borne alternative **40.** Le premier module de conversion électrique **30** comprend des premier, deuxième et troisième bras **42.** Chacun des bras s'étend entre le premier terminal continu **12** et le deuxième terminal continu **14.** Chacun de ces bras comprend un demi-bras supérieur **42a** s'étendant entre la première borne continue **32** et une des bornes alternatives **36,38,40** et un demi-bras inférieur **42b** s'étendant entre une des bornes alternatives **36,38,40** et la deuxième borne continue **34.**

Le premier module de conversion électrique **30** comprend six chaînes **43** de sous-modules **SM.** Chaque chaîne **43** de sous-modules est connectée dans un des demi-bras supérieur ou inférieur **42a,42b** du premier module de conversion électrique. Le premier module de conversion électrique **30** comprend donc trois chaines **43** de sous-modules connectés en série entre la première borne continue **32** et une des bornes alternatives **36,38,40,** ainsi que trois chaines **43** de sous-modules connectés en série entre une des bornes alternatives **36,38,40** et la deuxième borne continue **34.**

Le deuxième module de conversion électrique **50** est sensiblement identique au premier module de conversion électrique **30** et comprend une première borne continue **52** reliée électriquement au quatrième terminal continu **18** et une deuxième borne continue **54** reliée électriquement au troisième terminal continu **16.** Le deuxième module de conversion électrique **52** comprend également trois bornes alternatives **56,58,60.** Le deuxième module de conversion électrique **50** comprend trois bras **62** comprenant chacun un demi-bras supérieur **62a** et un demi-bras inférieur **62b** dans chacun desquels est connectée une chaîne **43** de sous-modules **SM.**

Les sous-modules **SM** de chacun des premier et deuxième module de conversion électrique **30,50** sont commandables individuellement par un organe de commande **T1,T2,** propre à chaque sous-module. Dans cet exemple non limitatif, les organes de commande comprennent deux transistors IGBT et deux diodes. Chaque sous-module **SM** comprend en outre un condensateur $C_{SMi}$. L'organe de commande **T1,T2** de chaque sous-module pouvant prendre au moins un premier état dans lequel le condensateur $C_{SMi}$ est inséré dans la chaîne **43** de sous-modules correspondante et un deuxième état dans lequel le condensateur $C_{SMi}$ n'est pas inséré dans ladite chaîne **43** de sous-modules **SM.** En commandant l'état des organes de commande **T1,T2** il est possible d'ajuster la tension aux bornes de chacune des chaînes **43** de sous-modules **SM** du convertisseur de tension **10.**

Une inductance est connectée dans chacun des demi-bras supérieur et inférieurs des premier et deuxième modules de conversion électrique **30,50,** en série avec les sous-modules **SM.**

Le convertisseur de tension comprend par ailleurs une partie alternative **48** à laquelle sont reliées les bornes alternatives **36,38,40,56,58,60** des premier et deuxième modules de conversion électrique **30,50.** Dans ce premier mode de réalisation, la partie alternative **48** du convertisseur de tension **10** comprend un transformateur triphasé **24** comprenant des enroulements primaires **26** reliés électriquement aux première, deuxième et troisième bornes alternatives **36,38,40** du premier module de conversion électrique **30.** Le transformateur **24** comprend en outre des enroulement secondaires **28** reliés aux première, deuxième et troisième bornes alternatives **56,58,60** du deuxième module de conversion électrique **50.**

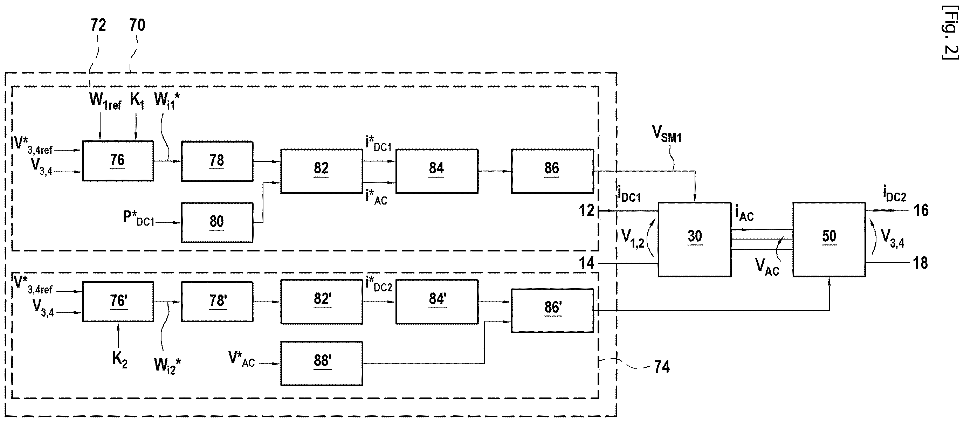

Selon l'invention, le convertisseur de tension **10** comprend par ailleurs un module de contrôle **70.** Ce module de contrôle sera décrit en référence à la figure **2.** Le module de contrôle **70** est configuré pour réguler les échanges d'énergie entre le premier réseau d'alimentation électrique continu **20** et le second réseau d'alimentation électrique continu **22** en commandant les organes de commande des sous-modules **SM** des premier et deuxième modules de conversion électrique **30,50.**

Sur cette figure **2,** on constate que le module de contrôle **70** comprend un premier ensemble de contrôle **72** configuré pour contrôler le premier module de conversion électrique **30** et un second ensemble de contrôle **74** configuré pour contrôler le deuxième module de conversion électrique **50.**

Le premier ensemble de contrôle **72** du module de contrôle **70** comprend un calculateur **76.** Le calculateur **76** est configuré pour calculer et délivrer une consigne d'énergie interne $W_{i1}^*$ du premier module de conversion électrique **30.** L'énergie interne $W_{i1}$ du premier module de conversion électrique correspond à l'énergie stockée dans les condensateurs $C_{SMi}$ des sous-modules **SM** dudit premier module de conversion électrique **30.**

Tel qu'on le constate sur la figure **2**, selon l'invention, le calculateur **76** est configuré pour déterminer ladite consigne d'énergie interne $W_{i1}{}^*$ du premier module de conversion électrique **30** en fonction d'un paramètre d'entrée réglable $K_1$ formant un coefficient de capacité virtuelle. Le calculateur **76** est en outre configuré pour déterminer la consigne d'énergie interne $W_{i1}{}^*$ du premier module de conversion électrique **30** en fonction d'une tension $v_{3,4}$ mesurée entre les troisième et quatrième terminaux continus **16,18**. Dans cet exemple non limitatif, la consigne d'énergie interne $W_{i1}{}^*$ du premier module de conversion électrique **30** est également fonction d'une consigne de tension $v^*_{3,4ref}$ entre les troisième et quatrième terminaux continus et d'une valeur nominale de l'énergie interne $W_{1ref}$ du premier module de conversion électrique **30** lorsque $v_{3,4}$ est égale à $v^*_{3,4ref}$.

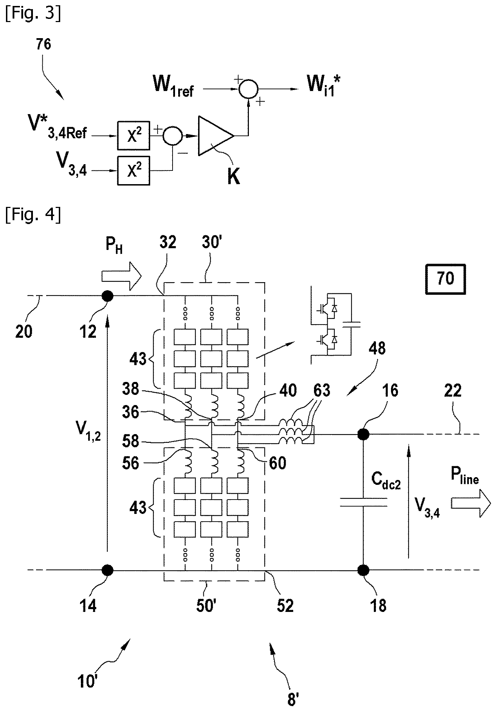

Un exemple de calculateur **76** est montré en figure **3**. Sur cette figure on constate que le calculateur **76** du premier ensemble de contrôle **72** reçoit en entrée ladite tension $v_{3,4}$ mesurée entre les troisième et quatrième terminaux continus **16,18**, ladite consigne de tension $v^*_{3/4ref}$ entre les troisième et quatrième terminaux continus et ladite valeur nominale de l'énergie interne $W_{1ref}$ du premier module de conversion électrique **30** lorsque $v_{3,4}$ est égale à $v^*_{3,4ref}$. Ladite tension $v_{3,4}$ mesurée est élevée au carré et comparée à ladite consigne de tension $v^*_{3,4ref}$ également élevée au carré, et le résultat de cette comparaison est multiplié par un facteur **K** qui est fonction du paramètre d'entrée réglable $K_1$. Le facteur **K** est ici égal à :

[Math. 4]

$$K = \frac{1}{2}6C_1K_1$$

$C_1$ est la capacité équivalente de l'ensemble des condensateurs d'une chaîne de sous-modules du premier module de conversion électrique **30**.

Le résultat est sommé avec la valeur nominale de l'énergie interne $W_{1ref}$ du premier module de conversion électrique lorsque $v_{3,4}$ est égale à $v^*_{3,4ref}$. La consigne d'énergie interne $W_{i1}{}^*$ du premier module de conversion électrique **30** obtenue est alors fournie à un module de gestion de l'énergie **78**.

Dans cet exemple non limitatif, le second ensemble de contrôle **74** comprend également un calculateur **76'** qui est configuré pour calculer et délivrer une consigne d'énergie interne $W_{i2}{}^*$ du deuxième module de conversion électrique **50**. Le calculateur **76'** du second ensemble de contrôle **74** reçoit en entrée ladite tension $v_{3,4}$ mesurée entre les troisième et quatrième terminaux continus **16,18**, ladite consigne de tension $v^*_{3,4ref}$ entre les troisième et quatrième terminaux continus et un deuxième paramètre d'entrée réglable $K_2$ associé au deuxième module de conversion électrique.

Le calculateur **76** du premier ensemble de contrôle **72** est configuré pour calculer la consigne d'énergie interne $W_{i1}{}^*$ du premier module de conversion électrique **30** selon la fonction suivante:

[Math. 5]

$$W_{i1}^* = \frac{1}{2}6C_1K_1\left(V_{3,4}^2 - V_{3,4ref}^{*2}\right) + W_{1ref}$$

où $C_1$ est la capacité équivalente de l'ensemble des condensateurs d'une chaîne de sous-modules du premier module de conversion électrique **30** et $K_1$ est le premier paramètre d'entrée réglable associé au premier module de conversion électrique. Il peut alors être démontré que :

[Math. 6]

$$\frac{1}{2}(C_{dc2} + 6\,C_1K_1 + 6\,C_2K_2)\frac{dV_{3,4}^2}{dt} = P_{dc1} - P_{Network2}$$

où $C_{dc2}$ est la capacité du second réseau d'alimentation électrique continu **22**, $C_2$ est la capacité équivalente de l'ensemble des condensateurs d'une chaîne de sous-modules du deuxième module de conversion électrique **50**, $K_2$ est un second paramètre d'entrée réglable associé au deuxième module de conversion électrique **50**, $P_{dc1}$ est une puissance prélevée par le convertisseur de tension sur le premier réseau d'alimentation électrique continu et $P_{Network2}$ est une puissance consommée par les composants connectés au second réseau d'alimentation électrique continu autres que les premier et deuxième modules de conversion électrique.

Par contrôle, en utilisant l'énergie interne du premier module de conversion électrique **30**, qui n'est pas connecté directement au second réseau d'alimentation électrique continu **22**, l'invention permet d'augmenter virtuellement la capacité vue par le second réseau d'alimentation électrique, d'une valeur de $6C_1K_1$.

Grâce au module de contrôle **70** et plus précisément au calculateur **76** du premier ensemble de contrôle **72**, le convertisseur de tension **10** est contrôlé de sorte que l'énergie interne du premier module de conversion électrique **30** contribue à stabiliser le second réseau d'alimentation électrique continu **22** connecté aux troisième et quatrième terminaux continus **16,18**. Cette contribution équivaut à augmenter virtuellement et de manière réglable, en agissant notamment sur le paramètre d'entrée réglable $K_1$, la capacité vue par le second réseau d'alimentation électrique continu **22**.

Le module de gestion de l'énergie **78** est configuré pour réguler l'énergie interne stockée dans les condensateurs des sous-modules du premier module de conversion électrique. Il est configuré pour fournir des consignes de courant, circulant dans les chaînes de sous-modules du premier module de de conversion électrique **30,** à un module de détermination de courant **82**, à partir de ladite consigne d'énergie interne $W_{i1}{}^*$ du premier module de conversion électrique **30**. Le premier ensemble de contrôle **72** du module de contrôle **70** comprend en outre un module de gestion de la puissance **80.** Le module de la gestion de la puissance **80** est configuré pour fournir des consignes de courant, circulant dans les chaînes de sous-modules du premier module de de conversion électrique **30,** audit module de détermination du courant **82** à partir d'une consigne de puissance du premier réseau d'alimentation électrique continu **20.** Ces consignes de courant peuvent comprendre des composantes alternatives et/ou continues.

Le module de détermination du courant **82** est configuré pour fournir à un régulateur du courant **84** une consigne de courant alternatif $i^*{}_{AC}$ pour la partie alternative **48** du convertisseur et une consigne de courant continu $i^*{}_{DC1}$ entrant dans le premier module de conversion électrique **30**. Le régulateur de courant **84** communique avec un module de commande **86** des sous-modules du premier module de conversion électrique **30**. Ce module de commande **86** est configuré pour commander l'insertion ou non des sous-modules **SM** dans les chaînes de sous-modules **43** et donc dans les demi-bras du premier module de conversion électrique **30**. Le module de contrôle **70** permet alors de déduire de la consigne d'énergie interne du premier module de conversion électrique **30** une consigne de tension $V_{SM1}$ aux bornes de chaque condensateur dudit premier module de conversion électrique. Le module de contrôle permet de réguler la tension aux bornes de chaque sous-module **SM** du premier module de conversion électrique.

Dans cet exemple non limitatif, le second ensemble de contrôle **74** comprend également un module de gestion de l'énergie **78'** configuré pour réguler l'énergie interne stockée dans les condensateurs des sous-modules du deuxième module de conversion électrique **50**. Le module de gestion de l'énergie **78'** reçoit en entrée une consigne d'énergie interne $W_{i2}{}^*$ du deuxième module de conversion électrique **50**. Le second ensemble de contrôle **74** comprend en outre un module de détermination du courant **82'** configuré pour délivrer une consigne de courant continu sortant du deuxième module de conversion électrique **50** à un régulateur du courant **84'**. Le second ensemble de contrôle **74** comprend de plus un régulateur de la tension alternative **88'** configuré pour réguler la tension de la partie alternative du convertisseur et recevant en entrée une consigne de tension alternative $V^*{}_{AC}$. Le second ensemble de contrôle **74** comprend enfin un module de commande **86'** des sous-modules du deuxième module de conversion électrique **50** configuré pour commander l'insertion ou non des sous-modules **SM** dans les chaînes de sous-modules **43** et donc dans les demi-bras du deuxième module de conversion électrique **50**.

Le module de contrôle est configuré pour déduire de ladite consigne d'énergie interne du premier module de conversion électrique une consigne de tension aux bornes des chaînes de sous-modules desdits premier et deuxième modules de conversion électrique.

La figure **4** montre une installation de transport de courant continu haute tension **8'** comprenant un deuxième mode de réalisation d'un convertisseur de tension **10'** selon l'invention, ayant une topologie DC-MMC. Dans ce deuxième mode de réalisation, le convertisseur de tension **10'** comprend également quatre terminaux continus **12,14,16,18** ainsi qu'un premier module de conversion électrique **30'** et un deuxième module de conversion électrique **50'**. Le premier module de conversion électrique **30'** comprend une unique borne continue **32** reliée électriquement au premier terminal continu **12** ainsi que des première, deuxième et troisième bornes alternatives **36,38,40**.

Le premier module de conversion électrique **30'** comprend trois chaines de sous-modules **43** chacune étant connectée dans un demi-bras s'étendant entre la borne continue **32** et une des bornes alternatives **36,38,40**. Autrement dit, le premier module de conversion électrique **30'** comprend une chaîne de sous-modules **43** connectée entre le premier terminal continu et la première borne alternative **36,** une chaîne de sous-modules **43** connectée entre le premier terminal continu et la deuxième borne alternative **38** et une chaîne de sous-modules **43** connectée entre le premier terminal continu et la troisième borne alternative **40**.

Le deuxième module de conversion électrique **50'** de ce convertisseur de tension **10'** comprend une unique borne continue **52** reliée électriquement au quatrième terminal continu **18** et au deuxième terminal continu **14**. Il comprend également des première, deuxième et troisième bornes alternatives **56,58,60**. Le deuxième module de conversion électrique **50'** comprend également trois chaines de sous-modules **43**, chacune étant connectée dans un demi-bras s'étendant entre la borne continue **52** et une des bornes alternatives **56,58,60**.

La première borne alternative **36** du premier module de conversion électrique **30'** est reliée directement à la première borne alternative **56** du deuxième module de conversion électrique **50'**. La deuxième borne alternative **38** du premier module de conversion électrique **30'** est reliée directement à la deuxième borne alternative **58** du deuxième module de conversion électrique **50'**. La troisième borne alternative **40** du premier module de conversion électrique **30'** est reliée directement à la troisième borne alternative **60** du deuxième module de conversion électrique **50'**.

Le convertisseur de tension **10'** comprend en outre une partie alternative **48** comprenant trois inductances **63** configurées pour être soumises à une composante alternative de courant ainsi qu'à une composante continue de courant. Ces trois inductances **63** forment ici la partie alternative du convertisseur. Une première inductance **63** est connectée entre la première borne alternative **36** du premier module de conversion électrique **30'** et le troisième terminal continu **16**. Une deuxième inductance **63** est connectée entre la deuxième borne alternative **38** du premier module de conversion électrique **30'** et le troisième terminal continu **16**. Une troisième inductance **63** est connectée entre la troisième borne alternative **40** du premier module de conversion électrique **30'** et le troisième terminal continu **16**.

Ce convertisseur de tension est également muni d'un module de contrôle **70** tel que celui illustré en figure **2** et comprenant un calculateur **76**.

Le calculateur **76** du premier ensemble de contrôle **72** est configuré pour calculer la consigne d'énergie interne **W$_{i1}$*** du premier module de conversion électrique **30'** du convertisseur de tension **10'** selon la fonction suivante:

[Math. 7]

$$W_{i1}^* = \frac{1}{2} 3C_1 K_1 \left( V_{3,4}^2 - V_{3,4ref}^{*2} \right) + W_{1ref}$$

où **C$_1$** est la capacité équivalente de l'ensemble des condensateurs d'une chaîne de sous-modules du premier module de conversion électrique **30'** et **K$_1$** est un premier paramètre d'entrée réglable associé au premier module de conversion électrique.

Parallèlement, le calculateur **76'** du second ensemble de contrôle **74** est configuré pour calculer la consigne d'énergie interne **W$_{i2}$*** du deuxième module de conversion électrique **50'** du convertisseur de tension **10'** selon la fonction suivante:

[Math. 8]

$$W_{i2}^* = \frac{1}{2} 3C_2 K_2 \left( V_{3,4}^2 - V_{3,4ref}^{*2} \right) + W_{2ref}$$

où **C$_2$** est la capacité équivalente de l'ensemble des condensateurs d'une chaîne de sous-modules du deuxième module de conversion électrique **50'**, **K$_2$** est un deuxième paramètre d'entrée réglable associé au deuxième module de conversion électrique, **W$_{2ref}$** est une valeur nominale de l'énergie interne du deuxième module de conversion électrique lorsque **v$_{3,4}$** est égale à **v*$_{3,4ref}$**.

Il peut alors être démontré que :

[Math. 9]

$$\frac{1}{2} \left( C_{dc2} + \frac{3K_1 C_1 + 3K_2 C_2}{1 - \frac{1}{n_{DC}}} \right) \frac{dV_{3,4}^2}{dt} = P_H - P_{line}$$

où **C$_{dc2}$** est la capacité du second réseau d'alimentation électrique continu **22**, **P$_H$** est puissance prélevée par le convertisseur de tension **10'** au premier réseau d'alimentation électrique **20** et **P$_{line}$** est une puissance consommée par les composants connectés au second réseau d'alimentation électrique continu autres que les premier et deuxième modules de conversion électrique.

**n$_{DC}$** est le rapport de transformation du convertisseur :

[Math. 10]

$$n_{DC} = \frac{V_{1,2}}{V_{3,4}}$$

où $v_{1,2}$ est la tension entre les premier et deuxième terminaux continus **16,18**.

Par contrôle, en utilisant l'énergie interne du premier module de conversion électrique **30'**, qui n'est pas connecté directement au second réseau d'alimentation électrique continu **22**, l'invention permet d'augmenter virtuellement la capacité vue par ce second réseau d'alimentation électrique, d'une valeur de :

[Math. 11]

$$\left( \frac{K_1 C_1}{1 - \frac{1}{n_{DC}}} \right)$$

Le premier module de conversion électrique **30'** contribue dès lors à stabiliser la tension du second réseau d'alimentation électrique continue **22**, notamment en réduisant la dérivée temporelle de la tension entre les troisième et quatrième terminaux continus.

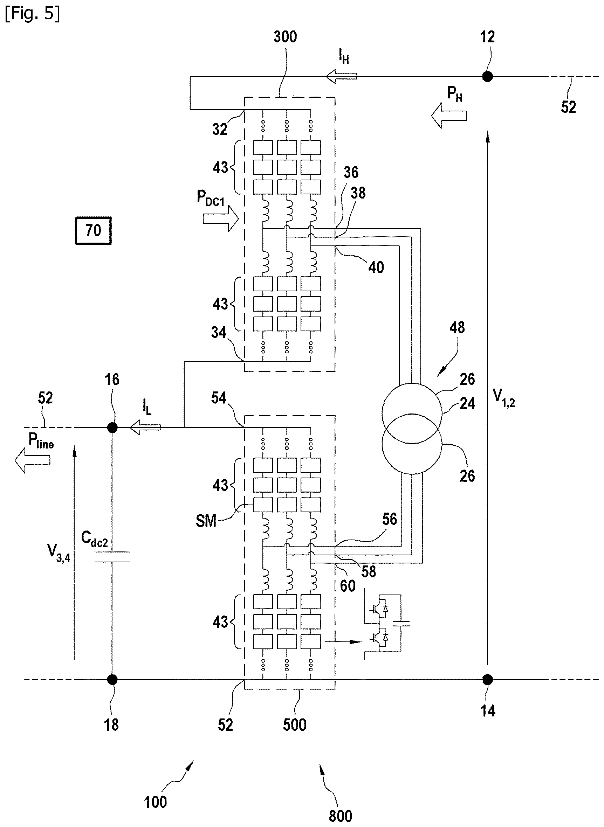

La figure **5** montre un troisième mode de réalisation d'un convertisseur de tension **100** selon l'invention, ayant une topologie de type autotransformateur DC. Dans ce troisième mode de réalisation, le convertisseur de tension **100** comprend également quatre terminaux continus **12,14,16,18** ainsi qu'un premier module de conversion électrique **300** et un deuxième module de conversion électrique **500**.

Le premier module de conversion électrique **300** de ce troisième mode de réalisation est identique au premier module de conversion électrique **30** du premier mode de réalisation. De même, le deuxième module de conversion électrique **500** de ce troisième mode de réalisation est identique au deuxième module de conversion électrique **50** du premier mode de réalisation.

Dans ce troisième mode de réalisation, la première borne continue **32** du premier module de conversion électrique **300** est reliée électriquement au premier terminal continu **12** et la deuxième borne continue **34** est reliée au troisième terminal continu **16**. La première borne **52** continue du deuxième module de conversion électrique **500** est reliée au quatrième terminal continu **18** tandis que sa deuxième borne continue **54** est reliée au troisième terminal continu **16**. En outre, le convertisseur de tension **100** comprend également un transformateur triphasé **24** comprenant des enroulements primaires **26** reliés électriquement aux première, deuxième et troisième bornes alternatives **36,38,40** du premier module de conversion électrique **300**. Le transformateur **24** comprend en outre des enroulements secondaires **28** reliés aux première, deuxième et troisième bornes alternatives **56,58,60** du deuxième module de conversion électrique **500**.

Ce convertisseur est également muni d'un module de contrôle **70** tel que celui illustré en figure **2** et comprenant un calculateur **76**.

Le calculateur **76** du premier ensemble de contrôle **74** est configuré pour calculer la consigne d'énergie interne $W_{i1}^*$ du premier module de conversion électrique **30** du convertisseur de tension **10'** selon la fonction suivante:

[Math. 12]

$$W_{i1}^* = \frac{1}{2} 6 C_1 K_1 \left( V_{3,4}^2 - V_{3,4ref}^{*2} \right) + W_{1ref}$$

Parallèlement, le calculateur **76'** du second ensemble de contrôle **74** est configuré pour calculer la consigne d'énergie interne $W_{i2}^*$ du deuxième module de conversion électrique **500** du convertisseur de tension **100** selon la fonction suivante:

[Math. 13]

$$W_{i2}^* = \frac{1}{2} 6 C_2 K_2 \left( V_{3,4}^2 - V_{3,4ref}^{*2} \right) + W_{2ref}$$

où $C_2$ est la capacité équivalente de l'ensemble des condensateurs d'une chaîne de sous-modules du deuxième module de conversion électrique **500** et $K_2$ est un deuxième paramètre d'entrée réglable associé au deuxième module de conversion électrique **500**.

Il peut alors être démontré que :

[Math. 14]

$$\frac{1}{2}\left(C_{dc2} + \frac{K_1 C_1 + K_2 C_2}{1 - \frac{1}{n_{DC}}}\right)\frac{dV_{3,4}^2}{dt} = P_H - P_{line}$$

où $P_H$ est puissance prélevée par le convertisseur de tension **100** au premier réseau d'alimentation électrique **20** et $P_{line}$ est une puissance consommée par les composants connectés au second réseau d'alimentation électrique continu autres que les premier et deuxième modules de conversion électrique.

Par contrôle, en utilisant l'énergie interne du premier module de conversion électrique **300,** qui n'est pas connecté directement au second réseau d'alimentation électrique continu **22,** l'invention permet d'augmenter virtuellement la capacité vue par ce second réseau d'alimentation électrique, d'une valeur de :

[Math. 15]

$$\left(\frac{K_1 C_1}{1 - \frac{1}{n_{DC}}}\right)$$

Le premier module de conversion électrique **300** contribue dès lors à stabiliser la tension du second réseau d'alimentation électrique continue **22,** notamment en réduisant la dérivée temporelle de la tension entre les troisième et quatrième terminaux continus.

**Revendications**

1. Convertisseur de tension (10,10',100) modulaire multi-niveaux, permettant de convertir une première tension continue en une seconde tension continue, le convertisseur comprenant :

    - des premier et deuxième terminaux continus (12,14) configurés pour être reliés électriquement à un premier réseau d'alimentation électrique continu (20);
    - des troisième et quatrième terminaux continus (16,18) configurés pour être reliés électriquement à un second réseau d'alimentation électrique continu (22);
    - au moins un premier module de conversion électrique (30,30',300) comprenant au moins une première borne continue (32) reliée électriquement au premier terminal continu et au moins une première borne alternative (36) reliée électriquement à une partie alternative (48) du convertisseur de tension soumise à au moins une composante alternative de tension, le premier module de conversion électrique comprenant en outre au moins une chaîne de sous-modules (43) connectés en série entre ladite première borne continue et ladite première borne alternative du premier module de conversion électrique, le premier module de conversion électrique étant configuré pour délivrer ou recevoir une puissance continue à destination ou en provenance dudit premier réseau d'alimentation électrique continu;
    - au moins un deuxième module de conversion électrique (50,50',500) comprenant au moins une première borne continue (52) reliée électriquement au quatrième terminal continu et au moins une première borne alternative (56) reliée électriquement à ladite partie alternative du convertisseur de tension, le deuxième module de conversion électrique comprenant en outre au moins une chaîne de sous-modules (43) connectés en série entre ladite première borne continue et ladite première borne alternative du deuxième module de conversion électrique, le deuxième module de conversion électrique étant configuré pour délivrer ou recevoir une puissance continue à destination ou en provenance dudit second réseau d'alimentation électrique continu,
    les sous-modules (SM) des chaînes de sous-modules desdits premier et deuxième modules de conversion électrique étant commandables individuellement par un organe de commande (T1,T2) propre à chaque sous-module et chaque sous-module comprenant un condensateur ($C_{SMi}$), l'organe de commande de chaque sous-module pouvant prendre au moins un premier état dans lequel le condensateur est inséré dans la chaîne de sous-modules correspondante et un deuxième état dans lequel le condensateur n'est pas inséré dans ladite chaîne de sous-modules, chaque chaîne de sous-modules présentant une énergie interne correspondant à l'énergie stockée dans les condensateurs des sous-modules de ladite chaîne de sous-modules,

le convertisseur de tension comprenant en outre un module de contrôle (70) du convertisseur configuré pour réguler les échanges d'énergie entre les premier et second réseaux d'alimentation électrique continus en commandant lesdits organes de commande des sous-modules des premier et deuxième modules de conversion électrique,

**caractérisé en ce que** le module de contrôle comprend un calculateur (76) configuré pour calculer une consigne d'énergie interne ($W_{i1}^*$) du premier module de conversion électrique, cette énergie interne étant stockée dans les condensateurs des sous-modules dudit premier module de conversion électrique, cette consigne d'énergie interne du premier module de conversion électrique étant calculée par application d'une fonction ayant un paramètre d'entrée réglable ($K_1$), ladite consigne d'énergie interne du premier module de conversion électrique étant déterminée en fonction de la tension mesurée ($v_{3,4}$) entre les troisième et quatrième terminaux continus, le module de contrôle étant configuré pour déduire de cette consigne d'énergie interne du premier module de conversion électrique une consigne de tension aux bornes de chaque condensateur dudit premier module de conversion électrique.

2. Convertisseur de tension selon la revendication 1, dans lequel le paramètre d'entrée réglable ($K_1$) est un coefficient de capacité virtuelle réglable.

3. Convertisseur de tension selon la revendication 1 ou 2, dans lequel le calculateur (76) est configuré pour calculer la consigne d'énergie interne ($W_{i1}^*$) du premier module de conversion électrique (30,30',300) selon la fonction :

$$W_{i1}^* = \frac{1}{2}NC_1K_1\left(v_{3,4}^2 - v_{3,4ref}^{*2}\right) + W_{1ref}$$

où N est le nombre de chaînes de sous-modules du premier module de conversion électrique, $C_1$ est une capacité équivalente d'une chaîne de sous-modules du premier module de conversion électrique, $K_1$ est le paramètre d'entrée réglable, $v_{3,4}$ est la tension mesurée entre les troisième et quatrième terminaux continus, $v_{3,4ref}^*$ est une consigne de tension entre les troisième et quatrième terminaux continus et $W_{1ref}$ est une valeur nominale de l'énergie interne du premier module de conversion électrique lorsque $v_{3,4}$ est égale à $v_{3,4ref}^*$.

4. Convertisseur de tension selon l'une quelconque des revendications 1 à 3, dans lequel le module de contrôle (70) est en outre configuré pour déduire de ladite consigne d'énergie interne ($W_{i1}^*$) du premier module de conversion électrique (30,30',300) une consigne de tension aux bornes des chaînes de sous-modules desdits premier et deuxième modules de conversion électrique.

5. Convertisseur de tension selon l'une quelconque des revendications 1 à 4, dans lequel le premier module de conversion électrique (30,30',300) comprend une deuxième borne alternative (38) reliée électriquement à ladite partie alternative du convertisseur de tension, le premier module de conversion électrique comprenant en outre une chaîne de sous-modules connectés en série entre ladite première borne continue et ladite deuxième borne alternative.

6. Convertisseur de tension selon l'une quelconque des revendications 1 à 5, dans lequel le premier module de conversion électrique (30,300) comprend en outre une deuxième borne continue (34) reliée électriquement à l'un des deuxième et troisième terminaux continus (14,16), le premier module de conversion électrique comprenant en outre une chaîne de sous-modules (43) connectés en série entre ladite première borne alternative (36) et ladite deuxième borne continue du premier module de conversion électrique.

7. Convertisseur de tension selon l'une quelconque des revendications 1 à 6, dans lequel le module de contrôle (70) comprend un calculateur supplémentaire configuré pour calculer une consigne d'énergie interne du deuxième module de conversion électrique (50), cette énergie interne étant stockée dans les condensateurs des sous-modules dudit deuxième module de conversion électrique, cette consigne d'énergie interne du deuxième module de conversion électrique étant calculée par application d'une fonction ayant un paramètre d'entrée réglable, ladite consigne d'énergie interne du deuxième module de conversion électrique étant fonction de la tension ($v_{1,2}$) mesurée entre les premier et deuxième terminaux continus, le module de contrôle supplémentaire étant configuré pour déduire de cette consigne d'énergie interne du deuxième module de conversion électrique une consigne de tension aux bornes de chaque condensateur dudit deuxième module de conversion électrique.

8. Convertisseur de tension selon l'une quelconque des revendications 1 à 7, dans lequel le deuxième module de conversion électrique (50,500) comprend en outre une deuxième borne continue (54) reliée électriquement au troisième terminal continu (16), le deuxième module de conversion électrique comprenant en outre une chaîne (43) de sous-modules (SM) connectés en série entre ladite première borne alternative (56) et ladite deuxième borne continue du deuxième module de conversion électrique.

9. Convertisseur de tension selon la revendication 8, comprenant en outre un transformateur (24) relié électriquement à la première borne alternative (36) du premier module de conversion électrique (30) et à la première borne alternative (56) du deuxième module de conversion électrique (50).

10. Module de contrôle (70) pour un convertisseur modulaire multi-niveaux (10,10',100) selon l'une quelconque des revendications 1 à 9, comprenant un calculateur (76) configuré pour calculer une consigne d'énergie interne ($W_{i1}^*$) du premier module de conversion électrique (30), cette énergie interne étant stockée dans les condensateurs des sous-modules dudit premier module de conversion électrique, cette consigne d'énergie interne du premier module de conversion électrique étant calculée par application d'une fonction ayant un paramètre d'entrée réglable ($K_1$), ladite consigne d'énergie interne du premier module de conversion électrique étant fonction de la tension ($v_{3,4}$) mesurée entre les troisième et quatrième terminaux continus, le module de contrôle étant configuré pour déduire de cette consigne d'énergie interne du premier module de conversion électrique une consigne de tension aux bornes de chaque condensateur dudit premier module de conversion électrique.

11. Installation (8,8',800) de transport de courant continu haute tension comprenant un premier réseau d'alimentation électrique continu (20), un second réseau d'alimentation électrique continu (22) et un convertisseur de tension (10,10',100) selon l'une quelconque des revendications 1 à 9, ledit convertisseur de tension étant configuré pour connecter électriquement lesdits premier et second réseaux d'alimentation électrique continus entre eux.

12. Procédé de contrôle d'un convertisseur de tension modulaire multi-niveaux (10,10',100), le convertisseur permettant de convertir une première tension continue en une seconde tension continue, et comprenant :

    - des premier et deuxième terminaux continus (12,14) configurés pour être reliés électriquement à un premier réseau d'alimentation électrique continu (20);
    - des troisième et quatrième terminaux continus (16,18) configurés pour être reliés électriquement à un second réseau d'alimentation électrique continu (22);
    - au moins un premier module de conversion électrique (30) comprenant au moins une première borne continue (32) reliée électriquement au premier terminal continu et au moins une première borne alternative (36) reliée électriquement à une partie alternative (48) du convertisseur de tension, le premier module de conversion électrique comprenant en outre au moins une chaîne (43) de sous-modules (SM) connectés en série entre ladite première borne continue et ladite première borne alternative du premier module de conversion électrique, le premier module de conversion électrique étant configuré pour délivrer ou recevoir une puissance continue à destination ou en provenance dudit premier réseau d'alimentation électrique continu;
    - au moins un deuxième module de conversion électrique (50) comprenant au moins une première borne continue (52) reliée électriquement au quatrième terminal continu et au moins une première borne alternative (56) reliée électriquement à ladite partie alternative du convertisseur de tension, le deuxième module de conversion électrique comprenant en outre au moins une chaîne de sous-modules connectés en série entre ladite première borne continue et ladite première borne alternative du deuxième module de conversion électrique, le deuxième module de conversion électrique étant configuré pour délivrer ou recevoir une puissance continue à destination ou en provenance dudit second réseau d'alimentation électrique continu,
    les sous-modules des chaînes de sous-modules desdits premier et deuxième modules de conversion électrique étant commandables individuellement par un organe de commande (T1,T2) propre à chaque sous-module et chaque sous-module comprenant un condensateur ($C_{SMi}$), l'organe de commande de chaque sous-module pouvant prendre au moins un premier état dans lequel le condensateur est inséré dans la chaîne de sous-modules correspondante et un deuxième état dans lequel le condensateur n'est pas inséré dans ladite chaîne de sous-modules, chaque chaîne de sous-modules présentant une énergie interne correspondant à l'énergie stockée dans les condensateurs des sous-modules de ladite chaîne de sous-modules,
    le procédé comprenant une étape de contrôle du convertisseur pour réguler les échanges d'énergie entre les premier et second réseaux d'alimentation électrique continus en commandant lesdits organes de commande des sous-modules des premier et deuxième modules de conversion électrique,
    l'étape de contrôle comprenant une étape de calcul d'une consigne d'énergie interne ($W_{i1}^*$) du premier module de conversion électrique, cette énergie interne étant stockée dans les condensateurs des sous-modules dudit premier module de conversion électrique, cette consigne d'énergie interne du premier module de conversion électrique étant calculée par application d'une fonction ayant un paramètre d'entrée réglable ($K_1$), ladite consigne d'énergie interne du premier module de conversion électrique étant fonction de la tension ($v_{3,4}$) mesurée entre les troisième et quatrième terminaux continus, l'étape de contrôle comprenant en outre une étape selon laquelle on déduit de cette consigne d'énergie interne du premier module de conversion électrique une consigne de tension aux bornes de chaque condensateur dudit premier module de conversion électrique.

**13.** Procédé de contrôle selon la revendication 12, dans lequel le paramètre d'entrée réglable ($K_1$) est un coefficient de capacité virtuelle réglable.

[Fig. 1]

[Fig. 2]

[Fig. 3]

[Fig. 4]

[Fig. 5]

Europäisches
Patentamt

European
Patent Office

Office européen
des brevets

# RAPPORT DE RECHERCHE EUROPEENNE

Numéro de la demande

EP 23 18 2303

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | CN 104 158 401 A (UNIV TSINGHUA; SHENZHEN POWER SUPPLY BUREAU) 19 novembre 2014 (2014-11-19) * abrégé; figure 1 * | 1-13 | INV. H02M7/483 H02M3/158 H02M3/335 H02M1/00 |
| Y | WO 2017/021642 A1 (INST SUPERGRID [FR]; INST NAT SCIENCES APPLIQUEES LYON [FR] ET AL.) 9 février 2017 (2017-02-09) * alinéas [0028], [0038]; figures 4,6 * | 1-13 | H02M1/32 |
| A | WO 2019/008275 A1 (INST SUPERGRID [FR]; CENTRALESUPELEC [FR]) 10 janvier 2019 (2019-01-10) * le document en entier * | 1-13 | |
| A | US 2015/256081 A1 (BAKRAN MARK-MATTHIAS [DE] ET AL) 10 septembre 2015 (2015-09-10) * figures 1,2,8 * | 1-13 | |

### DOMAINES TECHNIQUES RECHERCHES (IPC)

H02M

Le présent rapport a été établi pour toutes les revendications

| Lieu de la recherche | Date d'achèvement de la recherche | Examinateur |
|---|---|---|
| La Haye | 5 juillet 2023 | Gusia, Sorin |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 23 18 2303

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

05-07-2023

| Document brevet cité au rapport de recherche | Date de publication | Membre(s) de la famille de brevet(s) | Date de publication |
|---|---|---|---|
| CN 104158401 A | 19-11-2014 | AUCUN | |
| WO 2017021642 A1 | 09-02-2017 | BR 112018002282 A2 | 02-10-2018 |
| | | CA      2994372 A1 | 09-02-2017 |
| | | CN     107925362 A | 17-04-2018 |
| | | DK      3332474 T3 | 23-11-2020 |
| | | EP      3332474 A1 | 13-06-2018 |
| | | FR      3039940 A1 | 10-02-2017 |
| | | JP      6791964 B2 | 25-11-2020 |
| | | JP    2018522527 A | 09-08-2018 |
| | | KR    20180044306 A | 02-05-2018 |
| | | PL      3332474 T3 | 06-04-2021 |
| | | RU    2018107570 A | 05-09-2019 |
| | | US    2018226898 A1 | 09-08-2018 |
| | | WO    2017021642 A1 | 09-02-2017 |
| WO 2019008275 A1 | 10-01-2019 | BR 112020000235 A2 | 07-07-2020 |
| | | CA      3068415 A1 | 10-01-2019 |
| | | CN     110999052 A | 10-04-2020 |
| | | EP      3649728 A1 | 13-05-2020 |
| | | FR      3068842 A1 | 11-01-2019 |
| | | JP      7168645 B2 | 09-11-2022 |
| | | JP    2020527010 A | 31-08-2020 |
| | | KR    20200027991 A | 13-03-2020 |
| | | US    2020195165 A1 | 18-06-2020 |
| | | WO    2019008275 A1 | 10-01-2019 |
| US 2015256081 A1 | 10-09-2015 | CN     104685775 A | 03-06-2015 |
| | | EP      2898595 A1 | 29-07-2015 |
| | | ES      2768037 T3 | 19-06-2020 |
| | | KR    20150054999 A | 20-05-2015 |
| | | PL      2898595 T3 | 01-06-2020 |
| | | US    2015256081 A1 | 10-09-2015 |
| | | WO    2014056540 A1 | 17-04-2014 |

EPO FORM P0460

Pour tout renseignement concernant cette annexe : voir Journal Officiel de l'Office européen des brevets, No.12/82